Europäisches Patentamt

European Patent Office

Office européen des brevets

(19)

(11) **EP 0 717 813 B1**

(12) **EUROPÄISCHE PATENTSCHRIFT**

| | |
|---|---|
| (45) Veröffentlichungstag und Bekanntmachung des Hinweises auf die Patenterteilung:<br>**08.03.2000 Patentblatt 2000/10** | (51) Int. Cl.⁷: **F02C 7/30**, C10L 1/12 |
| (21) Anmeldenummer: **94924195.4** | (86) Internationale Anmeldenummer:<br>**PCT/DE94/00949** |
| (22) Anmeldetag: **18.08.1994** | (87) Internationale Veröffentlichungsnummer:<br>**WO 95/07408 (16.03.1995 Gazette 1995/12)** |

(54) **VERFAHREN ZUM BETRIEB EINER GASTURBINE MIT ZUFÜHRUNG EINES ZUSATZSTOFFES**

METHOD OF OPERATING A GAS TURBINE USING AN ADDITIVE FEED

PROCEDE PERMETTANT DE FAIRE FONCTIONNER UNE TURBINE A GAZ PAR APPORT D'ADDITIF

| | |
|---|---|
| (84) Benannte Vertragsstaaten:<br>**CH DE ES FR GB IT LI SE** | (72) Erfinder: **CZECH, Norbert**<br>**D-46286 Dorsten (DE)** |
| (30) Priorität: **08.09.1993 WO PCT/DE93/00821** | (56) Entgegenhaltungen: |
| (43) Veröffentlichungstag der Anmeldung:<br>**26.06.1996 Patentblatt 1996/26** | **EP-A- 0 193 838**      **WO-A-89/08803**<br>**AU-A- 496 757**      **FR-A- 1 312 669**<br>**GB-A- 740 062**      **US-A- 4 659 339**<br>**US-A- 4 804 388** |
| (73) Patentinhaber:<br>**SIEMENS AKTIENGESELLSCHAFT**<br>**80333 München (DE)** | • E.B.EVANS ET AL: 'The use of residual fuels in gas turbines', PROCEEDINGS FOURTH WORLD PETROLEUM CONGRESS ,SECTION VI/D |

**Beschreibung**

Die Erfindung betrifft ein Verfahren zum Betrieb einer Gasturbine, welche eine Brennkammer mit einem Brenner aufweist, wobei ein Vanadium enthaltender Brennstoff über den Brenner der Brennkammer zugeführt wird, und wobei gesondert von dem Brennstoff eine Lösung einer Verbindung von Magnesium und Wasser als Zusatzstoff in die Brennkammer eingedüst wird.

Ein derartiges Verfahren geht hervor aus der Schrift WO 89/08803 A1, deren gesamter Inhalt als Bestandteil der vorliegenden Offenbarung anzusehen ist.

Aus der Patentschrift EP 0 193 838 B1 sowie den US-Patenten 4,701,124 und Re.33,896 ist ein "Hybridbrenner" zum Einsatz in einer Brennkammer einer Gasturbine bekannt, welcher Möglichkeiten zur Einspritzung von Wasser oder Dampf in die Verbrennungszone in der Brennkammer, d. h. diejenige Zone, in der eine Flamme vorliegt, vorsieht. Im Hinblick auf Einzelheiten der Konstruktion des Hybridbrenners wird auf die drei genannten Schriften verwiesen. Weitere Varianten von Brennern, die die zusätzliche Einspritzung von Inertstoffen erlauben, gehen aus der Offenlegungsschrift DE 36 06 625 A1 hervor. Wasser und/oder Dampf werden demnach in die Verbrennungszone einer Brennkammer eingedüst, um dort die Temperatur zu senken und so die Erzeugung von umweitschädigenden Stickoxiden zu verringern.

Aus dem Stand der Technik ist es ferner bekannt, dem einer Gasturbine zugeführten Brennstoff Additive beizumischen, beispielsweise in bestimmte Bauteile der Gasturbine vor Schäden zu schützen. Damit sollen insbesondere Probleme vermieden werden, die entstehen, wenn ein Vanadium enthaltender Brennstoff, beispielsweise Schweröl, verwendet wird. Vanadium bildet an Heißgas führenden Bauteilen, insbesondere an Laufschaufeln und Leitschaufeln einer Gasturbine, niedrigschmelzende Vanadiumverbindungen, die chemisch sehr aggressiv sind und die Oberflächen der Bauteile angreifen können. Insbesondere können diese Vanadiumverbindungen schützende Oxidschichten auf den Bauteilen schnell auflösen. Hieraus kann sich eine stark beschleunigte Hochtemperaturkorrosion an den belasteten Bauteilen ergeben. Zur Vermeidung dieser Hochtemperaturkorrosion ist es bekannt, dem Brennstoff Verbindungen beizumischen, die während der Verbrennung mit dem Vanadium reagieren und bestimmte Salze, nämlich Vanadate, bilden, die derart hohe Schmelzpunkte aufweisen, daß sie bei üblichen Temperaturen in Gasturbinen stets in fester Form vorliegen. Unter zahlreichen Metallverbindungen haben sich insbesondere Verbindungen von Magnesium bewährt, da sich aus Vanadium und Magnesium eine Verbindung namens Magnesium-Orthovanadat ($Mg_3V_2O_8$) bildet, die erst bei 1159° C schmilzt. Diese Verbindung bildet feste Beläge auf den Bauteilen, insbesondere Schaufeln, einer Gasturbine, die allerdings leicht wieder entfernbar sind. Die Zuführung der Verbindungen des Magnesiums zur Brennkammer erfolgt üblicherweise zusammen mit dem Brennstoff. Hierzu können öllösliche, insbesondere organometallische, Verbindungen von Magnesium in dem Brennstoff gelöst oder mehr oder weniger beliebige, Magnesium enthaltende Zubereitungen in dem Brennstoff dispergiert werden; es wird beispielsweise eine feste Zubereitung in dem Brennstoff suspendiert unter Bildung einer kolloidalen Lösung oder eine flüssige Zubereitung, insbesondere eine wässrige Lösung eines Magnesiumsalzes, in dem Brennstoff emulgiert unter Bildung einer Emulsion.

Vanadium ist im Gegensatz zu Alkalimetallen, die durch Waschen des Schweröls mit Wasser entfernbar sind, nicht ohne erheblichen Aufwand aus Schweröl zu entfernen, da es in der Regel als organometallische Verbindung gelöst ist, anders als Alkalimetalle, die in Form fester Schwebteilchen oder wäßriger Lösungen dispergiert sind.

Weitere Hinweise zum Betrieb einer Gasturbine, die mit Vanadium enthaltendem Brennstoff befeuert wird und der Zusatzstoffe zugeführt werden, sind den drei ASME-Veröffentlichungen 74-GT-44, 81-GT-187 und 82-GT-53 entnehmbar. Alle drei Dokumente betreffen die Zuführung einer Magnesium enthaltenden Verbindung zu dem Brennstoff, wobei sowohl das Auflösen einer öllöslichen Verbindung als auch das Dispergieren einer Magnesiumverbindung in Frage kommt. Die Zuführung des Magnesiums zu der Brennkammer erfolgt jeweils zusammen mit dem Brennstoff. Pro Gewichtsanteil zugeführten Vanadiums sind jeweils etwa drei Gewichtsanteile Magnesium zuzuführen.

Die Herstellung eines öllöslichen Additives für einen Brennstoff ist sehr aufwendig und hat hohe Kosten zur Folge, die die Verwendung eines Brennstoffes mit hohem Gehalt an Vanadium unwirtschaftlich machen können. Die Beimischung einer preiswerteren, nicht öllöslichen Verbindung von Magnesium, z.B. Magnesiumoxid, zu dem Brennstoff unter Bildung einer Dispersion bereitet schwerwiegende Stabilitätsprobleme bei der Erhaltung der Dispersion und erfordert einen erheblichen apparativen Aufwand. Durch eine Dispersion in Form einer Suspension kann es außerdem zum Verschleiß von Düsen in einem Brenner kommen.

Aus der AU-B 496 757 ist die Dispersion einer Lösung von Magnesiumsulfat in Wasser in dem Brennstoff unter Bildung einer Emulsion bekannt. Die Dosierung der Lösung und die Mischung mit dem Brennstoff ist jedoch relativ aufwendig und nur schwer konstant zu halten. Dementsprechend mußte bisher in fast allen Anwendungsfällen auf teure öllösliche oder als Feststoff dispergierbare Magnesium enthaltende Additive für den Brennstoff zurückgegriffen werden.

Weitere Hinweise zur Beimischung von Additiven zu flüssigem Brennstoff sind dem Aufsatz "The Use of Residual Fuels in Gas Turbines", Proceedings of the Fourth World Petroleum Congress, Section VI/D, Paper 4, Seiten 291 bis 313, Rom 1955, entnehmbar.

Alle bekannten Verfahren zur Zuführung von Magnesium in eine Brennkammer einer Gasturbine, in der ein Vanadium enthaltender Brennstoff verfeuert wird, erfordern die Zuführung eines großen, üblicherweise dreifachen nach Gewichtsanteilen, Überschusses von Magnesium im Vergleich zu dem mit dem Brennstoff zugeführten Vanadium, um eine hinreichende Umwandlung des Vanadiums in ungefährliche Verbindungen zu erreichen. Damit ist zwangsläufig die Entstehung zusätzlicher Aschen in den die Brennkammer verlassenden Rauchgasen verbunden, was zu einer durchaus merklichen Belastung der Gasturbine und ihrer entsprechenden Bauteile führen kann. Der erhebliche Überschuß an Magnesium bewirkt auch, daß sich die Aschen anreichern mit Magnesiumoxid, welches wasserunlöslich ist und die Entfernung abgelagerter Aschen aus der Turbine im Rahmen der üblichen Waschprozesse erschwert.

Aufgabe der Erfindung ist die Angabe eines Verfahrens der eingangs genannten Gattung, bei dem die Bildung zusätzlicher Aschen gegenüber den Verfahren des Standes der Technik wesentlich verringert ist.

Zur Lösung dieser Aufgabe wird ein Verfahren zum Betrieb einer Gasturbine, welche eine Brennkammer mit einem Brenner aufweist, angegeben, wobei ein Vanadium enthaltender Brennstoff über den Brenner der Brennkammer zugeführt wird, und wobei gesondert von dem Brennstoff eine Lösung einer Verbindung von Magnesium in Wasser als Zusatzstoff in die Brennkammer eingedüst wird, wobei erfindungsgemäß der Brennkammer pro Gewichtsanteil Vanadium in dem Brennstoff etwa ein Gewichtsanteil Magnesium zugeführt und die Lösung direkt in eine Flamme des Brenners eingedüst wird.

Die Erfindung geht von der Erkenntnis aus, daß im Rahmen der gesonderten Eindüsung einer wässrigen Lösung einer Verbindung von Magnesium eine derart feine Verteilung des Magnesiums in der Brennkammer, insbesondere in der Verbrennungszone der Brennkammer, erreichbar ist, daß sich die Zuführung eines erheblichen Überschusses an Magnesium erübrigt. In Ansehung dessen, daß eine im Hinblick auf die Bildung von Magnesium-Orthovanadat stöchiometrische Zuführung von Magnesium die Zuführung von etwa 0,7 Gewichtsanteilen Magnesium pro Gewichtsanteil Vanadium erfordert, ist erfindungsgemäß nur mehr ein etwa 0,42 facher Überschuß notwendig im Vergleich zum bisher notwendigen fünffachen Überschuß. Somit kann eine wesentliche Reduzierung der Belastung der Gasturbine durch Aschen erreicht werden. Da mit der Erfindung Aschen erhalten werden, die wesentlich ärmer an Magnesium sind als bisher erhaltene Aschen, wird auch das Problem der Entfernung abgelagerter Aschen beachtlich vereinfacht. Da der Gehalt an Magnesiumoxid wesentlich geringer ist als bisher möglich, ist die Entfernung von Aschen mit einem einfachen und billigen Waschprozeß gewährleistet.

Durch die Reduzierung der Zufuhr an Magnesium bis knapp über die stöchiometrisch erforderliche Zufuhr kann eine wesentliche Reduzierung der Belastung der Gasturbine erreicht werden. Auch die ökonomischen Vorteile, die sich im Rahmen der Erfindung erzielen lassen, sind durchaus erheblich, da sowohl laufende Kosten für die notwendigen Magnesiumverbindungen als auch der apparative Aufwand kleiner sind als bisher.

Als Verbindung von Magnesium wird vorteilhafterweise ein Magnesiumsalz verwendet, insbesondere das auch als "Bittersalz" oder "Epsom Salt" bekannte Magnesiumsulfat. Es sei bemerkt, daß Magnesiumsulfat üblicherweise in einer kristallinen, sieben Wassermoleküle pro Magnesiumatom enthaltenden Form gehandelt wird. Da erfindungsgemäß das Magnesiumsulfat ohnehin in Wasser zu lösen ist, kommt es nicht auf das zusammen mit dem Magnesiumsulfat kristallisierte Wasser an; die Zusammensetzung des Handelsprodukts ist selbstverständlich bei der Bildung der in die Brennkammer einzudüsenden Lösung zu berücksichtigen.

Die Konzentration der Lösung wird vorteilhafterweise so eingestellt, daß pro Volumenanteil Brennstoff etwa 1/10 oder weniger Volumenanteile Lösung eingedüst werden. Derart kann die Verbrennung neben der Reaktion zwischen Magnesium und Vanadium in besonders vorteilhafter Weise beeinflußt werden.

Allgemein ist festzustellen, daß das gesonderte Eindüsen einer in Wasser gelösten Verbindung des Magnesiums als Lösung in die Brennkammer verfahrenstechnisch wesentlich leichter zu beherrschen ist als das Emulgieren einer in Wasser gelösten Magnesiumverbindung in den Brennstoff und die Zuführung dieser Emulsion zu der Brennkammer. Im Rahmen des gesonderten Eindüsens der Lösung kann eine genaue Dosierung des zuzuführenden Anteils von Magnesium im Verhältnis zum Anteil des Vanadiums im Brennstoff problemlos bewerkstelligt werden. Eventuell notwendige Zusatzeinrichtungen am Brenner sind nicht besonders aufwendig; insbesondere können Zusatzeinrichtungen, die sich im Zusammenhang mit der Reduzierung von Stickoxiden im Abgas schon bewährt haben, eingesetzt werden.

Im Hinblick auf die Löslichkeit des Magnesiumsulfats in Wasser sei bemerkt, daß sich bei 20° C 25,8 %, bei 0° C 20,9 % Magnesiumsulfat in Wasser lösen; es hat sich als vorteilhaft erwiesen, die Konzentration des Magnesiumsulfats in der erfindungsgemäß einzusetzenden Lösung auf höchstens 1 Gew.-% zu begrenzen.

In der Flamme des Brenners, die durch Verbrennung des Vanadium enthaltenden Brennstoffes erzeugt wird und der gesondert Magnesiumsulfat zugeführt wird, läuft folgende Reaktion ab:

$$3\ MgSO_4 + V_2O_5 \rightarrow Mg_3V_2O_8 + 3SO_3.$$

Die Menge des durch das Sulfat in die Flamme zusätzlich eingeführten Schwefels fällt gegenüber derjenigen Menge an Schwefel, die gewöhnlich ohnehin im Brennstoff enthalten ist, in der Regel nicht ins Gewicht. Auch ansonsten ergeben sich gegenüber der Beimischung einer öllöslichen Verbindung von Magnesium keine Nachteile für den Verbrennungsprozeß und die entstehenden Emissionen.

Die zum Betrieb einer üblichen Kraftwerks-Gasturbine benötigten Mengen an Magnesiumsulfat und Wasser seien anhand des folgenden Beispiels erläutert: Bei einem angenommenen, relativ hohen Gehalt an Vanadium von 300 ppm im Brennstoff und einem Dosierverhältnis von einem Gewichtsanteil Magnesium zu einem Gewichtsanteil Vanadium benötigt eine Gasturbine mit einem Brennstoffverbrauch von 10 kg pro Sekunde etwa 54 kg pro Stunde Magnesiumsulfat. Wird eine 20 %ige Lösung von Magnesiumsulfat in Wasser eingesetzt, was angesichts der oben genannten Daten genügend weit von der Löslichkeitsgrenze entfernt ist und demgemäß keine Gefahr der Auskristallisation von Magnesiumsulfat mit sich bringt, so beträgt die benötigte Lösungsmenge etwa 270 kg pro Stunde bzw. 225 Liter pro Stunde.

Ein Experiment zum Vergleich der erfindungsgemäßen Magnesiumzugabe mit einer an sich bekannten Magnesiumzugabe durch Einmischen einer kolloidalen Dispersion von Magnesiumoxid in den Brennstoff wurde durchgeführt an einer Kraftwerksgasturbine mit einer Nennleistung von 75 MW, bei der das Rauchgas mit einer Temperatur von 950° C in die Turbine eintritt. Als Brennstoff wurde ein Schweröl mit einer Konzentration von Vanadium zwischen 250 ppm und 280 ppm eingesetzt. Der Brennstoff war von Natrium und Kalium weitgehend befreit durch eine zweistufige Behandlung mit Wasser und nachfolgende Zentrifugalseparation. Der Gehalt des Brennstoffes an Schwefel lag bei etwa 2,8 %.

Im Rahmen der Erprobung der Erfindung wurde Magnesiumsulfat in entionisiertem Wasser gelöst, beiden Brennkammern der Gasturbine zugeführt und durch Eindüsungseinrichtungen für Wasser in den Brennern den Flammen in den Brennkammern zugeführt. Die Zugabe des Magnesiumsulfates wurde so bemessen, daß etwa ein Gewichtsanteil Magnesium pro Gewichtsanteil Vanadium in die Brennkammern gelangte. Die Zugabe der Lösung wurde in Abhängigkeit von der von der Turbine abgegebenen Leistung geregelt, und die Konzentration des Magnesiums in der Lösung wurde permanent durch Messung der elektrischen Leitfähigkeit der Lösung kontrolliert.

Mit der Magnesiumzugabe im Sinne der Erfindung war unter den gegebenen Umständen ein Dauerbetrieb der Gasturbine über 150 Stunden möglich, bevor die Gasturbine zur Reinigung abgeschaltet werden mußte. Die abgelagerten Aschen, die im Inneren der Turbine aufgefunden wurden, waren gelb und weich. Sie bestanden hauptsächlich aus den gewünschten Komponenten Magnesium-Orthovanadat und Magnesiumsulfat. Eine eingehende chemische Analyse von 44 Proben von den Wänden der Brennkammern, dem inneren Gehäuse der Turbine und den Leitschaufeln der ersten Stufe der Turbine erwies, daß das Verhältnis des Magnesiumsanteil zu dem Vanadiumanteil in allen Proben nur wenig Streuung zeigte; dies ist ein guter Hinweis darauf, daß alles mit dem Brennstoff zugeführte Vanadium wunschgemäß in Magnesium-Orthovanadat umgewandelt wurde. In keiner Probe findet sich ein Magnesiumanteil, der geringer ist als der Vanadiumanteil; dies bedeutet, daß überall in der Turbine eine vollständige Umwandlung von Vanadium in Magnesium-Orthovanadat gegeben ist, trotz der im Vergleich zur üblichen Praxis minimalen Zugabe von Magnesium. Die Ablagerungen in der Turbine ließen sich in zufriedenstellender Weise abwaschen, und nach dem Waschprozeß wurde die im Verlauf des Experiments um 10 % abgefallene ursprüngliche Leistung sowie der ursprüngliche Wirkungsgrad der Turbine wieder erreicht.

Zum Vergleich wurde auch die Zugabe von Magnesium in Form von kolloidal in dem Brennstoff dispergiertem Magnesiumoxid erprobt. Eine kolloidale Dispersion von Magnesiumoxid in einer zur Beimischung zum Brennstoff geeigneten Flüssigkeit steht im Handel zur Verfügung. Anstelle der Zugabe der wässrigen Lösung wurde das Magnesiumoxid nach den Vorschriften des Herstellers, insbesondere also unter Zugabe von drei Gewichtsanteilen Magnesium pro Gewichtsanteil Vanadium, dem Brennstoff zugegeben. Bereits nach 60 bis 80 Stunden, zu vergleichen mit 150 Stunden bei Magnesiumzugabe im Sinne der Erfindung, hatte sich die abgegebene Leistung der Gasturbine um 10 % reduziert. In der Turbine wurden dicke, stellenweise zusammengebackene und harte Ablagerungen gefunden. Alle Ablagerungen wiesen Anteile von Magnesiumoxid auf. Proben der Ablagerungen von denselben Stellen, an denen zur Erprobung der Erfindung Proben genommen wurden, zeigten eine bemerkenswerte Streuung im Verhältnis der Anteile von Magnesium und Vanadium. In den meisten Proben wurde ein bemerkenswerter Überschuß von Magnesium aufgefunden, teilweise größer als der Überschuß von Magnesium in dem Brennstoff. Andere Proben zeigten allerdings ein Verhältnis der Anteile an Magnesium zu den Anteilen an Vanadium nahe 1 und somit am Minimum, so daß sich eine Verringerung der Magnesiumzugabe in Form der Suspension als ausgeschlossen erwies. Das Abwaschen der abgelagerten Aschen erwies sich als schwierig wegen des überall vorhandenen Magnesiumoxids; zur vollständigen Reinigung der Turbine mußte teilweise auf ein Reinigungsverfahren mittels Hochdruck-Wasserstrahl zurückgegriffen werden, was bei Anwendung der Erfindung in keinem Fall erforderlich war.

Insgesamt erwies sich bei dem Experiment, daß die Anwendung der Erfindung eine Reduzierung der durch die Anwesenheit von Vanadium in dem Brennstoff verursachten Kosten von bis zu 90 % gegenüber den konventionellen Maßnahmen erlaubte; diese hohe Ersparnis ist begründet sowohl darin, daß eine relativ teure Magnesiumzubereitung durch ein wesentlich billigeres Produkt ersetzt wird als auch darin, daß nur noch eine wesentlich verringerte Magnesiumzugabe erforderlich ist und nicht zuletzt darin, daß die Betriebsdauer der Turbine zwischen zwei Reinigungsprozeduren auf das Doppelte verlängert ist.

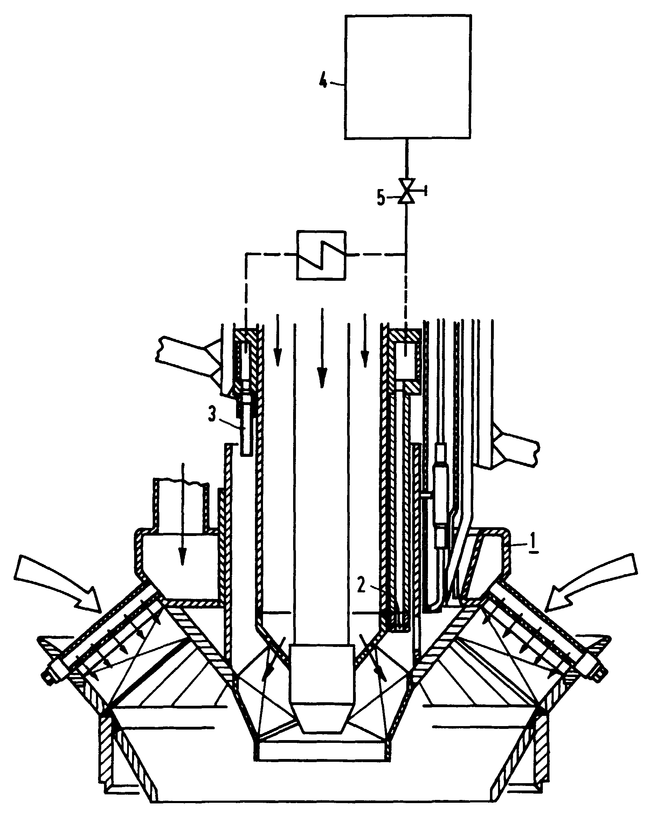

Ein Ausführungsbeispiel der Erfindung ist schematisch in der Zeichnung skizziert. Dabei wurde beispielhaft ein Brenner gewählt, wie er ausführlich in der EP 0 193 838 B1 beschrieben ist. Auf Ausführungen zu den konstruktiven Einzelheiten des Brenners selbst sei hier verzichtet. Wichtig ist nur, daß der Brenner 1 Vorrichtungen zur Eindüsung von Wasser 2 und/oder Dampf 3 aufweist. Nicht entscheidend ist, ob es sich um einen Vormischbrenner, einen Diffusionsbrenner oder einen Hybridbrenner, also eine Kombination aus Vormischbrenner und Diffusionsbrenner, handelt. Erfindungsgemäß ist einem solchen Brenner 1 mindestens ein Vorratsbehälter 4 zugeordnet, der über eine Dosiereinrichtung 5 mit den Eindüsungsvorrichtungen 2, 3 in Verbindung steht. Die Erfindung eignet sich besonders für Gasturbinen, in denen immer oder zeitweise ein Vanadium enthaltender Brennstoff, insbesondere Schweröl, verfeuert werden soll.

## Patentansprüche

1. Verfahren zum Betrieb einer Gasturbine, welche eine Brennkammer mit einem Brenner aufweist, wobei ein Vanadium enthaltender Brennstoff über den Brenner der Brennkammer zugeführt wird, und wobei gesondert von dem Brennstoff eine Lösung einer Verbindung von Magnesium in Wasser als Zusatzstoff in die Brennkammer eingedüst wird, **dadurch gekennzeichnet,** daß der Brennkammer pro Gewichtsanteil Vanadium in den Brennstoff etwa ein Gewichtsanteil Magnesium zugeführt und die Lösung direkt in eine Flamme des Brenners eingedüst wird.

2. Verfahren nach Anspruch 1, bei dem die Verbindung von Magnesium ein Magnesiumsalz ist.

3. Verfahren nach Anspruch 2, bei dem das Magnesiumsalz Magnesiumsulfat ist.

4. Verfahren nach einem der vorhergehenden Ansprüche, bei dem die Konzentration der Verbindung von Magnesium in der Lösung so eingestellt wird, daß pro Volumenanteil des Brennstoffes etwa 1/10 oder weniger Volumenanteil der Lösung eingedüst wird.

## Claims

1. Method for operating a gas turbine having a combustion chamber with a burner, a vanadium-containing fuel being fed via the burner to the combustion chamber and, separately from the fuel, a solution of a compound of magnesium in water being injected as an additive into the combustion chamber, characterized in that about 1 part by weight of magnesium per part by weight of vanadium in the fuel is fed to the combustion chamber and the solution is injected directly into a flame of the burner.

2. Method according to Claim 1, wherein the compound of magnesium is a magnesium salt.

3. Method according to Claim 2, wherein the magnesium salt is magnesium sulphate.

4. Method according to one of the preceding claims, wherein the concentration of the compound of magnesium in the solution is adjusted such that about 1/10 part by volume or less of the solution is injected per part by volume of the fuel.

## Revendications

1. Procédé pour faire fonctionner une turbine à gaz, qui comporte une chambre de combustion ayant un brûleur, un combustible renfermant du vanadium étant envoyé à la chambre de combustion par l'intermédiaire du brûleur, et, indépendamment du combustible, une solution aqueuse d'un composé de magnésium étant projeté comme additif dans la chambre de combustion, caractérisé en ce qu'il consiste à envoyer à la chambre de combustion par parties en poids de vanadium dans le combustible à peu près une partie en poids de magnésium et à projeter la solution directement dans une flamme du brûleur.

2. Procédé suivant la revendication 1, dans lequel le composé de magnésium est un sel de magnésium.

3. Procédé suivant la revendication 2, dans lequel le sel de magnésium est du sulfate de magnésium.

4. Procédé selon l'une des revendications précédentes, dans lequel la concentration du composé de magnésium dans la solution est réglée de telle façon qu'il est projeté par partie en volume du combustible à peu près un dixième ou moins d'un dixième de partie en volume de la solution.